# EUROPEAN PATENT APPLICATION

(11) **EP 4 521 255 A1**
(43) Date of publication of application: **12.03.2025**
(21) Application number: 23822624.5
(22) Date of filing: 20.01.2023
(51) Int. Cl.: G06F 11/30

(54) **METHOD FOR ADJUSTING OPERATING STATE OF APPLICATION, TERMINAL AND STORAGE MEDIUM**

(30) Priority: 15.06.2022 CN 202210676015
(71) Applicant: ZTE CORPORATION, Shenzhen, Guangdong 518057 (CN)
(72) Inventor: XIE, Jun, Shenzhen, Guangdong 518057 (CN)
(74) Representative: Chimini, Francesco
(86) International application number: PCT/CN2023/073431
(87) International publication number: WO 2023/241052

(57) **Abstract**

The present disclosure relates to the technical field of terminals. Provided are a method for adjusting a running state of an application, a terminal and a storage medium. The method comprises: obtaining a resource usage condition of a target application in a current restricted time period on the basis of current running information of the target application in the current restricted time period; calculating a target threshold value applicable to a current user according to a target adjustment factor corresponding to the current user and a basic threshold value, so as to dynamically adjust the basic threshold value on the basis of usage habits of the current user for the target application in the current restricted time period; and adjusting a current usage state of the target application according to a comparison result between the current running information and the target threshold value.

## Description

### Cross-Reference to Related Disclosure

This disclosure claims priority to Chinese Patent Application No. CN202210676015.4 filed on June 15, 2022 and entitled "Method for Adjusting Running State of Application, Terminal and Storage Medium", which is incorporated herein by reference in its entirety.

### Technical Field

The present disclosure relates to the technical field of terminals, and in particular, to a method for adjusting a running state of an application, a terminal and a storage medium.

### Background

At present, with regard to application usage restrictions in a mobile terminal, one approach is to restrict the time for a user to log in to a target application, for example, in a teenager mode, a login time period and a login duration are restricted, and the browsing content is restricted; the other approach is to preset the usage time and frequency of the target application, so as to restrict the usage of the target application. However, the described two approaches impose mandatory restrictions on the target application, and the control means is not flexible enough. For example, when the user is using the target application, the target application is forcibly closed due to reaching the restricted time, which affects the user experience.

Therefore, how to solve the problem of low flexibility of existing target application restriction methods becomes a technical problem to be solved urgently.

### Summary

The main objective of the present disclosure is to provide a method for adjusting a running state of an application, a terminal and a storage medium, so as to solve the technical problem of low flexibility of existing target application restriction methods.

The present disclosure provides a method for adjusting a running state of an application. The method for adjusting a running state of an application comprises: current running information of a target application is acquired; wherein the current running information is resource usage data of the target application in a current restricted time period; a target adjustment factor corresponding to a current user and a basic threshold value of the target application in the current restricted time period are acquired, and a target threshold value is calculated on the basis of the target adjustment factor and the basic threshold value; and a running state of the target application in the current restricted time period is adjusted on the basis of a comparison result between the current running information and the target threshold value.

The present disclosure further provides a terminal. The terminal comprises a processor, a memory, and one or more computer programs stored in the memory and executable by the processor. The one or more computer programs are executable by one or more processors to implement the steps of the described method for adjusting a running state of an application.

The present disclosure further provides a computer readable storage medium. The computer readable storage medium stores one or more computer programs which, when executed by a processor, implement the steps of the described method for adjusting a running state of an application.

### Brief Description of the Drawings

Fig. 1 is a schematic structural diagram of hardware of a terminal involved in a solution of the present disclosure;
Fig. 2 is a schematic flowchart of a first example of a method for adjusting a running state of an application in the present disclosure;
Fig. 3 is a schematic flowchart of a second example of a method for adjusting a running state of an application in the present disclosure;
Fig. 4 is a schematic flowchart of a third example of a method for adjusting a running state of an application in the present disclosure;
Fig. 5 is a schematic flowchart of a fourth example of a method for adjusting a running state of an application in the present disclosure;
Fig. 6 is a schematic diagram of functional modules of an apparatus for adjusting a running state of an application in a first example in the present disclosure.

The implementation of the objectives, functional features, and advantages of the present disclosure will be further described with reference to the drawings in combination with examples.

### Detailed Description of the Embodiments

It should be understood that the specific examples described herein are only used to explain the present disclosure and are not intended to limit the present disclosure.

With the rapid development of mobile Internet, mobile terminals gradually become an indispensable part of people's daily life. Accordingly, the time and frequency of people using mobile terminals in daily life are increasing. However, improper use of the mobile terminals will greatly affect people's daily life and physical health. Especially for minors, the use of mobile terminals for a long time will lead to a decline in vision, thereby affecting their physical and mental health.

At present, with regard to application usage restrictions in a mobile terminal, one approach is to restrict the time for a user to log in to a target application, for example, in a teenager mode, a login time period and a login duration are restricted, and the browsing content is restricted; the other approach is to preset the usage time and frequency of the target application, so as to restrict the usage of the target application. However, the described two approaches impose mandatory restrictions on the target application, and the control means is not flexible enough. For example, when the user is using the target application, the target application is forcibly closed due to reaching the restricted time, which affects the user experience.

Therefore, how to solve the problem of low flexibility of existing target application restriction methods becomes a technical problem to be solved urgently.

The method for adjusting a running state of an application according to the present disclosure is mainly applied to a terminal. The terminal may be a device having displaying and processing functions, such as a PC, a portable computer, or a mobile terminal.

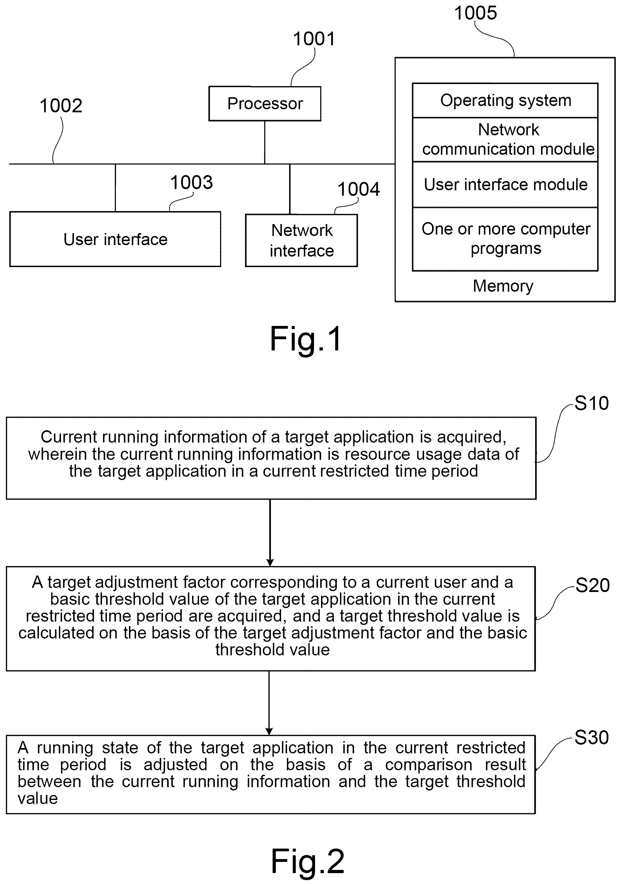

Referring to Fig. 1, Fig. 1 is a schematic structural diagram of hardware of a terminal involved in a solution of the present disclosure. In the present disclosure, the terminal may comprise a processor 1001 (for example, a CPU), a communication bus 1002, a user interface 1003, a network interface 1004, and a memory 1005. The communication bus 1002 is configured to implement connection and communication between these components; the user interface 1003 may comprise a Display, and an input unit such as a Keyboard; the network interface 1004 optionally may comprise a standard wired interface and a standard wireless interface (such as a WI-FI interface); and the memory 1005 may be a high-speed RAM memory or a non-volatile memory, for example, a disk memory. Optionally, the memory 1005 may also be a storage apparatus independent of the foregoing processor 1001.

A person skilled in the art may understand that the hardware structure shown in Fig. 1 does not limit the terminal involved in the present disclosure, and may comprise more or less components than those shown in the figure, or combine some components, or have different component arrangements.

With continued reference to Fig. 1, the memory 1005 in Fig. 1 as a computer readable storage medium may comprise an operating system, a network communication module, and one or more computer programs.

In Fig. 1, the network communication module is mainly configured to connect to a server and perform data communication with the server. In addition, the processor 1001 may invoke one or more computer programs stored in the memory 1005, and execute the method for adjusting a running state of an application provided in the present disclosure.

The present disclosure provides a method for adjusting a running state of an application.

Referring to Fig. 2, Fig. 2 is a schematic flowchart of a first example of a method for adjusting a running state of an application in the present disclosure.

In this example, the method for adjusting a running state of an application comprises the following steps S10 to S30.

Step S10: current running information of a target application is acquired, wherein the current running information is resource usage data of the target application in a current restricted time period.

In this example, the current running information refers to system resources required when the target application runs, and the control on the resource usage may indirectly control the running state of the target application. When a target application needs to be restricted, a usage condition of resources is sampled on the basis of an application restriction instruction, and generally, the usage of various types of resources used for running the target application in the current restricted time period is accumulated to serve as current running information of the target application.

In an exemplary embodiment, the running information of the present disclosure refers to system resources used by an application during running, such as power consumption, cache space, running duration, and Internet access data traffic. The running state refers to a process state of the application, and is mainly classified into that the application process does not exist (i.e. halted running), is running in the foreground, and is running in the background. In the present disclosure, the adjustment to the running state mainly comprises allowing the application process to continue (i.e. allowing the application to run), restricting the running of the application (i.e. restricting the resource usage of the application), or ending the application process (i.e. halting the running of the application), etc.

In an exemplary embodiment, the application restriction method provided in the present disclosure needs to be triggered and executed on the basis of an application restriction instruction. The application restriction method is not a function that must be included in one device, but can be used as a function item or a function application. A user can autonomously choose whether to use same, thereby improving the user experience.

In an exemplary embodiment, on the basis of an application restriction instruction, the application restriction method provided in the present disclosure is executed, that is, an application running restriction mode is entered. The mode may be independently configured with a switch for use, for example, the mode is enable by means of user menu selection, icon triggering, a remote control command, device starting configuration, or by triggering at a preset time point or a periodical time point; the mode can also be used in combination with the existing modes of the device, such as the teenager mode, and the growth protection mode.

In this example, the purpose of general resource control is to reduce damage to a human body caused by use of an electronic device, or to save limited resources, and therefore, all resources related to the resource control may be controlled by using the application restriction method provided in the present disclosure. On the basis of experiences related to user eye vision protection, power saving, and paid traffic, resources that are typically required to be controlled for use involve a plurality of resource restriction dimensions such as a foreground running duration, application power consumption, and Internet access data traffic of an application.

The various types of resources that need to be collected may be resource shares required for the running of the target application itself, and used by other application services due to depending on other application services in the running process of the target application.

In an exemplary embodiment, the sampling accumulation for each type of resources in this example is represented in the original unit of resources.

The foreground running duration may be represented on the basis of system clock accuracy, for example, nanosecond (ns), and when the target application is in the foreground running state, the current time stamp is sampled, and then the time stamp saved last time is subtracted to obtain a difference value, and the difference value is used as the value of dalta that needs to be accumulated in the current sampling.

The application power consumption may be based on power consumption statistics of the system itself, for example, application electricity consumption statistics in an android system, where the unit is generally milliampere-hour (mAh).

The Internet access data traffic may be individually selected to be charged public network traffic transceiving statistics, and may also be all data transceiving statistics including free wifi data, where the unit is generally KB.

In an exemplary embodiment, in the resource sampling process, for example, in a smaller unit restricted time period, a delta accumulative value is generally calculated according to a stub event time stamp corresponding to the resource features, or the value of delta is accumulated over a certain frequency sampling period. For example, for the foreground running duration, if the time stamp when the system receives the event of the target application switching to the foreground is t1, and the event of the target application switching to the background or another event of a non-target application switching to the foreground is received at an interval, and at this time, the system time stamp is denoted as t2, then the foreground running duration of the target application this time is (t2-t1).

In an exemplary embodiment, the restriction on various types of resources has a timeline attribute, which is denoted as a restricted time period, and in this example, the restricted time period for the current running of the target application is denoted as a current restricted time period. The restricted time period generally has a start time point and an end time point, where the end time point may be manually set, or the time when a certain event is triggered may be denoted as the end time point, for example, exiting the application restriction method of the present disclosure.

In an exemplary embodiment, a plurality of continuous restricted time periods may be combined as the current restricted time period, sampling of various types of resources is completed in each sub-restricted time period, and the current running information of the current restricted time period is finally obtained through accumulation.

In an exemplary embodiment, time distribution needs to be preset for the definition of the restricted time period in the present disclosure, which may be periodically configured according to the calendar time, or may be configured for use at one time. For example, when executing the application restriction method of the present disclosure, the user selects 18:00-21:00 of the current day as a restricted time period via a setting interface, the application restriction method of the present disclosure is not executed in the non-restricted time period, but the application restriction method will be executed in the described time period of the current day. If daily periodical execution is selected on the basis of the configuration, then the application restriction method of the present disclosure will be triggered and executed daily in this time period later.

In an exemplary embodiment, the restricted time period may be set as a combination of a plurality of sub-time periods, for example, different time periods in one day: 11:00-13:00/18:00-20:00, and a plurality of sub-time periods are combined into one complete restricted time period. In this case, it only indicates that only the running information of the target application collected in the respective sub-time periods is valid, without affecting the execution of the application restriction method of the present disclosure.

Step S20: a target adjustment factor corresponding to a current user and a basic threshold value of the target application in the current restricted time period are acquired, and a target threshold value is calculated on the basis of the target adjustment factor and the basic threshold value.

In this example, the target threshold value is calculated on the basis of the basic threshold value of each type of resources and the target adjustment factor. The basic threshold value is used as a reference value, and the target adjustment factor serves as an adjustment basis for proportional floating of the basic threshold value. For example, if the basic threshold value of a resource is 100 and the target adjustment factor is 10%, then the maximum target threshold value of the resource is 100*(1+10%)=110. The target threshold value is used as an overuse comparison standard for the current running information of the target application in the current restricted time period, and a corresponding target threshold value needs to be calculated for each type of resources in the current running information.

It can be understood that, a target adjustment factor may be separately set for each type of resources in the current running information to adjust each type of resources separately; the same target adjustment factor may also be used for comprehensive calculation to uniformly adjust various types of resources.

It will be appreciated that the current user may be any user using the target application. In an embodiment, the current user using the target application can be specified according to account information, etc., and a historical resource usage value or a historical adjustment factor of the current user can be invoked according to the account information of the current user, so as to further determine a basic threshold value and a target adjustment factor of the current user in the current restricted time period. If the current user is a user using the target application for the first time, an initial adjustment factor and a basic threshold value may be used, and then adjustment may be performed according to usage habits of the current user.

Step S30: a running state of the target application in the current restricted time period is adjusted on the basis of a comparison result between the current running information and the target threshold value.

In this example, by comparing the current running information of the target application with the target threshold value, various types of resource usage conditions in the current running information are determined, so as to obtain a usage condition of the target application in the current restricted time period, and a running state of the target application is correspondingly adjusted according to the usage condition of the target application.

In an exemplary embodiment, if the current running information is greater than the target threshold value, it indicates that the target application in the current restricted time period has been overused, and at this time, the running of the target application needs to be restricted, and the running of the target application is halted; if the current running information is less than the target threshold value, it indicates that the usage of the target application in the current restricted time period is in an allowed restricted range, and at this time, the restriction on the target application may be relaxed, so as to allow the target application to continue running.

This example provides a method for adjusting a running state of an application. The method comprises: current running information of a target application is acquired; wherein the current running information is resource usage data of the target application in a current restricted time period; a target adjustment factor corresponding to a current user and a basic threshold value of the target application in the current restricted time period are acquired, and a target threshold value is calculated on the basis of the target adjustment factor and the basic threshold value; and a running state of the target application in the current restricted time period is adjusted on the basis of a comparison result between the current running information and the target threshold value. By means of the method, a resource usage condition of a target application in a current restricted time period is obtained on the basis of current running information of the target application in the current restricted time period; a target threshold value applicable to a current user is calculated according to a target adjustment factor corresponding to the current user and a basic threshold value, so as to dynamically adjust the basic threshold value on the basis of usage habits of the current user for the target application in the current restricted time period; and the current usage condition of the target application is adjusted according to a comparison result between the the current running information and the target threshold value, so as to dynamically adjust the target application, allowing for flexible running restriction on the target application, improving the user experience, and solving the technical problem of low flexibility of existing target application restriction methods.

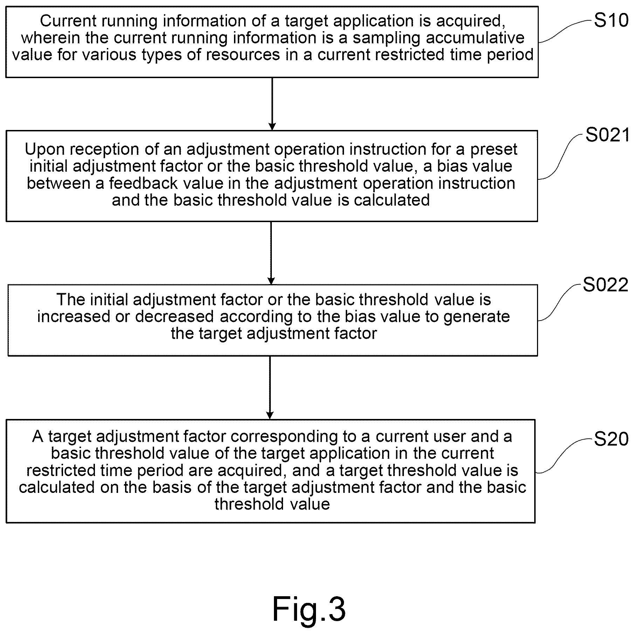

Referring to Fig. 3, Fig. 3 is a schematic flowchart of a second example of a method for adjusting a running state of an application in the present disclosure.

Based on the example shown in Fig. 2, in this example, before step S20, step S021 to step S022 are further specifically included.

Step S021: upon reception of an adjustment operation instruction for a preset initial adjustment factor or the basic threshold value, a bias value between a feedback value in the adjustment operation instruction and the basic threshold value is calculated. Step S022: the initial adjustment factor or the basic threshold value is increased or decreased according to the bias value to generate the target adjustment factor.

In this example, the use of the initial adjustment factor is generally valid in the current restricted time period, and after the initial adjustment factor corresponding to the current restricted time period is calculated, the initial adjustment factor may remain unchanged. However, upon reception of feedback data sent by the current user on the basis of the preset initial adjustment factor or the basic threshold value, the initial adjustment factor can be correspondingly adjusted according to actual usage requirements to generate a target adjustment factor, so as to dynamically set the target threshold value.

In an exemplary embodiment, the initial adjustment factor may be a preset initial value, for example, a range of an initial adjustment factor is obtained by evaluation according to historical running information, so as to set the initial adjustment factor for the current restricted time period according to the range. The initial adjustment factor for the current restricted time period may also be calculated according to the bias value between the mathematical expectation of the historical running information and the basic threshold value.

In an exemplary embodiment, when application restriction is performed in the current restricted time period, it is necessary to acquire an original basic threshold value Old_base for each type of resources, historical running information Old_std_1, Old_std_2, ..., and Old_std_n of n restricted time periods saved before the current restricted time period, an original resource adjustment factor Old_factor and an original basic adjustment factor Base_factor, so as to calculate a new initial adjustment factor New_factor.

In an exemplary embodiment, historical running information Old_std_1, Old_std_2, ..., and Old_std_n of n restricted time periods saved before the current restricted time period is acquired, and a mathematical expectation Old_e of n pieces of historical running information is calculated by means of an existing mathematical calculation method; a bias ratio value of the mathematical expectation Old_e with respect to the original basic threshold value Old_base for each type of resources is calculated, i.e. Bias=(Old_e-Old_base)/Old_base; and a basic bias Bias_0 can be added with reference to the bias ratio value, and a new initial adjustment factor is calculated, i.e. New_factor=Bias_0-Bias, such that the calculated initial adjustment factor meets actual requirements.

In an exemplary embodiment, an existing mathematical calculation method is used to calculate a bias ratio value of a mathematical expectation Old_e of n pieces of historical running information with respect to an original basic threshold value Old_base for each type of resources: Bias=(Old_e-Old_base)/Old_base. If the bias ratio value is a negative number, it indicates that the overall expectation of the historical running information does not exceed the basic threshold value, and at this time, the initial adjustment factor can be expanded, thereby indirectly increasing the target threshold value; and if the bias ratio value is a positive number, it indicates that the overall expectation of historical running information exceeds the basic threshold value, i.e. the various types of resources are overused, and at this time, the initial adjustment factor should be decreased, and then the target threshold value is indirectly decreased to restrict the usage of various types of resources.

In an exemplary embodiment, after the current restricted time period ends, experience evaluation performed by the user on the application running restriction in the current restricted time period may be obtained through interaction with the user, and corresponding feedback data is generated according to the experience evaluation. On the basis of the described feedback data, the initial adjustment factor in the current restricted time period is dynamically adjusted, so as to dynamically adjust the target threshold value for each type of resources, and gradually adjust the resources used by the target application, thereby achieving the purpose of controlling a running state of the application. For example, if the resources are overused, but it is considered reasonable from the evaluation of the user, the basic threshold value may be adjusted in combination with the resource usage and the adjustment factor in a matched manner, such that the current running information of the target application does not exceed the target threshold value, thereby allowing the target application to continue running.

In an exemplary embodiment, before step S20, the method specifically further comprises:
an initial adjustment factor and an initial threshold value are read; wherein the initial adjustment factor and the initial threshold value are determined on the basis of historical resource usage data corresponding to at least one historical user, and the historical resource usage data comprises a foreground running duration, application power consumption and Internet access data traffic; and the initial adjustment factor is updated according to target resource usage data corresponding to the current user to generate the target adjustment factor.

In this example, after a restricted time period ends, running information of the target application sampled in the restricted time period is saved, wherein the running information can reflect a running restriction execution effect of the target application, and can be used for calculating an initial adjustment factor and a basic threshold value. However, different users have different usage requirements and usage habits for the target application in the same restricted time period. When the initial adjustment factor or the basic threshold value generated according to usage data of a previous user is not suitable for usage requirements of a current user, the initial adjustment factor can be correspondingly adjusted according to resource usage data of the current user to generate a target adjustment factor suitable for the current user.

In an exemplary embodiment, after the initial adjustment factor corresponding to the current restricted time period of the target application is obtained, the basic factor can be correspondingly adjusted according to feedback data automatically evaluated by a system or feedback data provided after usage by different users, so as to generate a target adjustment factor suitable for the current restricted time period. The target adjustment factor for each restricted time period can be calculated and adjusted accordingly, such that the adjustment factor becomes an iterative feedback parameter.

In an exemplary embodiment, the initial adjustment factor and the basic threshold value of a current restricted time period are calculated according to the historical running information, and the initial adjustment factor can be correspondingly calculated and adjusted according to actual usage conditions of the target application by different users, so as to perform corresponding restriction adjustment to the running restrictions on the target application. Users who can observe the application usage restrictions can be allowed to overuse the application within a certain range. On the contrary, for users who always overuse the application, the usage duration of the target application can be restricted, thereby achieving the management and control effects for the target application.

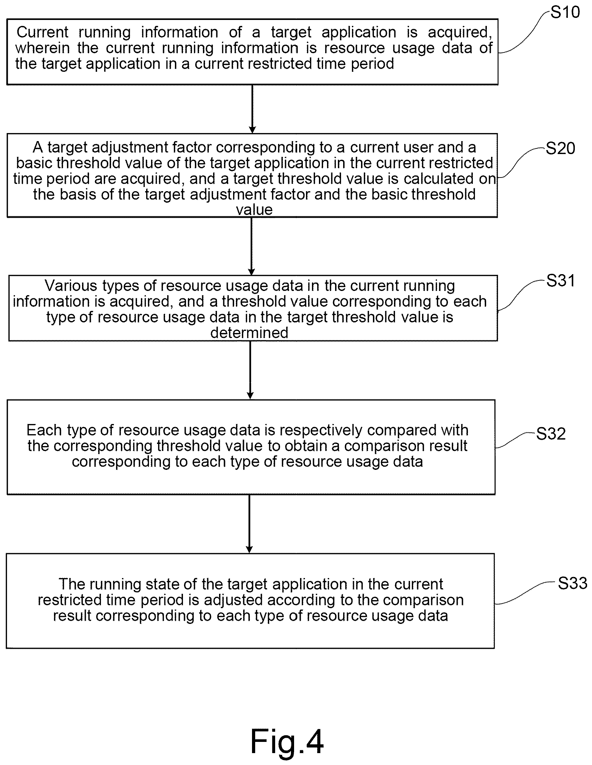

Referring to Fig. 4, Fig. 4 is a schematic flowchart of a third example of a method for adjusting a running state of an application in the present disclosure.

Based on the example shown in Fig. 2, in this example, step S30 specifically includes step S31 to step S33.

Step S31: various types of resource usage data in the current running information is acquired, and a threshold value corresponding to each type of resource usage data in the target threshold value is determined.

In this example, the running process of the application requires the support of various types of resources, for example, a foreground running duration, application power consumption and Internet access data traffic. Overuse judgement standards for resources of different types are different, and different types of resource usage data by the target application are also different. Hence, different threshold values need to be set for different types of resource usage data, so as to avoid the problem that the purpose of restriction cannot be achieved due to unreasonable overuse judgement for various types of resource usage data.

Step S32: each type of resource usage data is respectively compared with the corresponding threshold value to obtain a comparison result corresponding to each type of resource usage data. Step S33: the running state of the target application in the current restricted time period is adjusted according to the comparison result corresponding to each type of resource usage data.

In an exemplary embodiment, step S33 may comprise: an overuse tag corresponding to the resource whose usage data is greater than the corresponding threshold value is set to true, and an overuse tag corresponding to the resource whose usage data is not greater than the corresponding threshold value is set to false; and the running state of the target application in the current restricted time period is adjusted according to the overuse tag of each type of resources.

In this example, each type of resources in the current running information is marked according to the comparison result of comparing each type of resource usage data with the corresponding threshold value respectively; if the resource usage data of a certain type of resources is greater than the corresponding threshold value, then the resource overuse tag of this type is set to "TRUE", i.e. the tag is set to TRUE; accordingly, if the resource usage data of a certain type of resources is less than the corresponding threshold value, then the resource overuse tag of this type is set to "FALSE", i.e. the tag is set to false.

In an exemplary embodiment, the step that the running state of the target application in the current restricted time period is adjusted according to the overuse tag of each type of resources specifically comprises: a logic operation is performed on a current overuse tag of each type of resources, and the running state of the target application in the current restricted time period is adjusted to be a restricted running state or halted running state according to a result of the logic operation.

In an exemplary embodiment, it is assumed that there are I types of resources, corresponding overuse tags: Tag 1, Tag 2, Tag 3, ..., and Tag I can be obtained, a mixed logic combination operation is performed on these tags, and a result thereof is set as Tag_result. For example, a simple AND operation may be performed, i.e. overuse of all resources simultaneously: Tag_result = Tag 1 & Tag 2 & ... & Tag I; mixed logic may also be performed, i.e. overuse of resource 1 and overuse of one of the other resources: Tag_result = Tag 1 & (Tag 2 | Tag3 ... | Tag I).

If a logic operation result is "TRUE", it indicates that the sampling accumulative value for at least one type of target resources among various types of resources exceeds a corresponding target threshold value, and at this time, it is determined that a target adjustment state of the target application is halting the running of the target application; if the logic operation result is "FALSE", it indicates that the sampling accumulative value for each type of resources does not exceed the corresponding target threshold value, and at this time, it is determined that the target adjustment state of the target application is allowing the running of the target application; and after the logic operation is completed, corresponding adjustment is performed on the current running state of the target application according to a determination result.

In an exemplary embodiment, the step that the running state of the target application in the current restricted time period is adjusted according to the overuse tag of each type of resources specifically further comprises: in the case where an overuse resource with the overuse tag being true exists in the various types of resources, a resource level of the overuse resource is acquired; when the resource level of the overuse resource reaches a preset level, the running state of the target application in the current restricted time period is adjusted to be a halted running state; and when the resource level of the overuse resource does not reach the preset level, the running state of the target application in the current restricted time period is adjusted to be a restricted running state.

In an exemplary embodiment, if a resource with the overuse tag being true exists in the various types of resources, it indicates that the resource usage data of at least one type of resources exceeds a threshold value corresponding to the resources, and the running state of the target application needs to be restricted at this time.

In an exemplary embodiment, when the running state of the target application needs to be restricted, it may be determined, according to actual usage requirements of a user or an actual usage condition of current resource usage data, whether the adjustment state of the target application is a restricted running state or halted running state.

In an exemplary embodiment, before the overuse tag is made, one or more overuse levels may be set for the overuse data in the resource usage data, and an overuse threshold value is set for each overuse level corresponding to this type of resources according to the threshold value of this type of resources, which may be set proportionally or at equal intervals. For example, it is assumed that the threshold value for a certain type of resources is 100,105 may be set as a first overuse level, and 110 may be set as a second overuse level, or an increase of a resource usage value by 10% on the basis of the threshold value is set as one overuse level.

In an exemplary embodiment, when it is detected that the resource usage data of a certain type of resources exceeds a corresponding threshold value, an overuse level of the resource usage data of this type of resources is determined, and if the overuse level of this type of resources is a first level, it indicates that the overuse degree of this type of resources is relatively low, and it may be that the proportion of resources occupied by the target application is relatively large due to the excessive running of the application. In this case, the running state of the target application may be adjusted to be a restricted running state. If the overuse level of this type of resources is a second level or more, it indicates that the overuse degree of this type of resources is relatively high, and it may be that the running time of the target application is relatively long. In this case, the running state of the target application may be adjusted to be a halted running state, so as to forcibly remind the current user to stop running the target application.

In this example, by setting an overuse level, overuse usage of the target application is dynamically restricted, and a restricted running state is equivalent to reminding the user to choose to actively stop or the target application being about to forcibly stop, rather than directly and forcibly stopping the running of the target application, such that a certain time can be reserved for the user to perform corresponding processing, allowing for a flexible application restriction method, and improving the use experience of the user. In addition, setting an upper limit for overuse levels, and retaining a restriction function for forcibly stopping running the target application can avoid users with poor self-discipline from overusing the target application, thereby ensuring the practical purpose and effectiveness of the application restriction function.

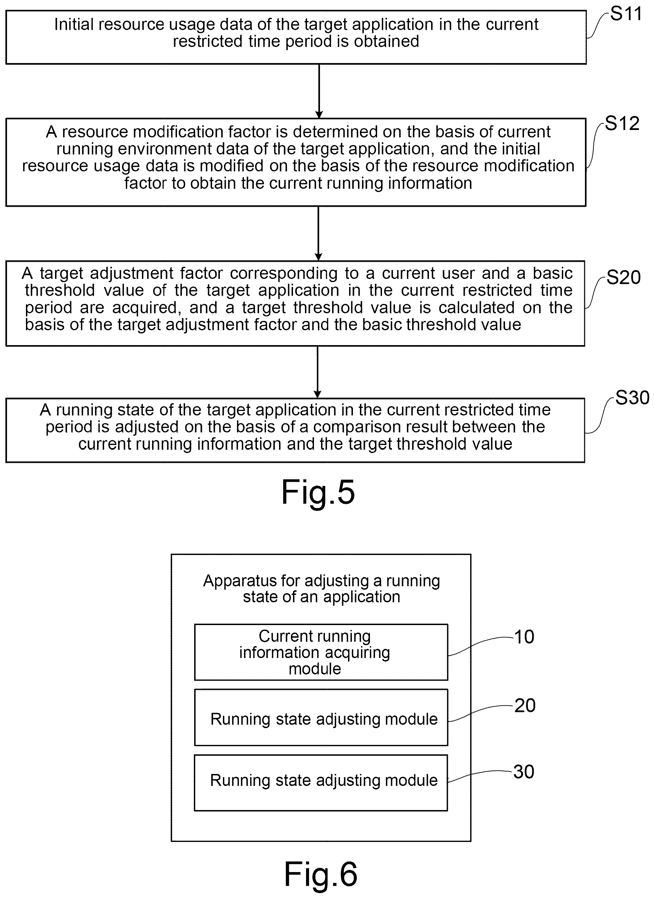

Referring to Fig. 5, Fig. 5 is a schematic flowchart of a fourth example of a method for adjusting a running state of an application in the present disclosure.

Based on the example shown in Fig. 2, in this example, step S10 specifically includes step S11 to step S12.

Step S11: initial resource usage data of the target application in the current restricted time period is obtained, and a resource modification factor is determined on the basis of current running environment data of the target application. Step S12: the initial resource usage data is modified on the basis of the resource modification factor to obtain the current running information.

In this example, current running environment data of the target application may affect the current running information of the target application. In order to more rationally adjust and restrict various types of resources used by the target application, modification operations for increasing, decreasing and maintaining the actual sampling accumulative values of various types of resources can be performed in a modification manner in the present disclosure.

In an exemplary embodiment, when executing the application restriction method, the usage conditions of various types of resources by the target application in the current restricted time period are sampled, so as to obtain corresponding initial resource usage data, and then a resource modification factor is obtained by evaluation according to the effects of the device usage state and the device usage environment on the user experience, and the collected initial resource usage data is modified by means of the resource modification factor to obtain modified resource usage data as the current running information of the target application in the current restricted time period.

In an exemplary embodiment, the application restriction method provided in the present disclosure is typically applied to a mobile device such as a mobile phone and a tablet, a target application of which the running needs to be restricted is installed in the mobile device, the typical target application is a game, and controlled applications can be extended to an installed application collection, such as gaming applications, belonging to the same application category. In actual control, a plurality of applications in the same category may be taken as a collection to be subjected to running restriction, that is, the plurality of applications are taken as an application group or collective applications to obtain an application collection, and the running information corresponding to the application collection is a sum of sampling accumulative values of various types of resources used by respective target applications in this category in the restricted time period.

In an exemplary embodiment, the environment in which the device is located and the state of the device have effects on the usage of various types of resources. For example, if, in the cases of different brightness and darkness relative to the environment, the screen brightness of the device is too bright or too dim, then the damage to the user's eyes will be increased, and at this time, the usage of resources should be restricted to be less, and the user should be reminded to reduce the usage of the device in this environment; or under a certain environmental noise, if the volume is too large or too small, the user experience may be affected, and thus it is required to restrict the usage of resources to be less; or due to the effects of the environment and the device temperature, in an inappropriate environment or device temperature, the usage of resources should be restricted to be less. In addition, the location where a user uses a mobile device may also be an affecting factor, and the user may expect different degrees of restriction in different places, and therefore, the resource restriction on the target application needs to be flexibly adjusted according to actual usage scenarios and usage requirements.

In an exemplary embodiment, the modification for a type of resources based on a variety of factors of the environment and the device may be understood as being represented by an equivalent modification factor. For example, a modification factor being 1 indicates that the environment and the device state do not modify an accumulative result; if the modification factor is greater than 1, it indicates that after the sampling accumulative value of resources actually used is modified by the modification factor, an expanded virtual accumulative value may be obtained, and at this time, sampling accumulation for various types of resources may be accelerated, and the target threshold value is reached faster, resulting in restriction on the running of the target application. Moreover, if the modification factor is less than 1, the sampling accumulative value will be decreased, and the time for the sampling accumulative value of each type of resources to reach the target threshold value will be delayed, such that the target application can run for a longer time.

In this example, in consideration of the effects of different environments and terminal states on the user experience, the two types of factors are embodied in the accumulative calculation of the resource usage data, so as to modify the actually sampled initial resource usage data, such that the application restriction method of the present disclosure is more suitable for the subjective feeling of the user, thereby improving the user experience.

In addition, the present disclosure further provides an apparatus for adjusting a running state of an application.

Referring to Fig. 6, Fig. 6 is a schematic diagram of functional modules of an apparatus for adjusting a running state of an application in a first example in the present disclosure.

In this example, the apparatus for adjusting a running state of an application comprises a current running information acquiring module 10, a target threshold value calculating module 20, and a running state adjusting module 30.

The current running information acquiring module 10 is configured to acquire current running information of a current application. The current running information is resource usage data of the target application in a current restricted time period. The target threshold value calculating module 20 is configured to acquire a target adjustment factor corresponding to a current user and a basic threshold value of the target application in the current restricted time period, and calculate a target threshold value on the basis of the target adjustment factor and the basic threshold value. The running state adjusting module 30 is configured to adjust a running state of the target application in the current restricted time period on the basis of a comparison result between the current running information and the target threshold value.

In an exemplary embodiment, the apparatus for adjusting a running state of an application may further comprise a target adjustment factor generating module, wherein the target adjustment factor generating module may comprise: a bias value calculating unit, configured to, upon reception of an adjustment operation instruction for a preset initial adjustment factor or the basic threshold value, calculate a bias value between a feedback value in the adjustment operation instruction and the basic threshold value; and a target adjustment factor generating unit configured to increase or decrease the initial adjustment factor or the basic threshold value according to the bias value to generate the target adjustment factor.

In an exemplary embodiment, the target adjustment factor generating module specifically further comprises: an initial adjustment factor generating unit configured to read an initial adjustment factor and an initial threshold value; wherein the initial adjustment factor and the initial threshold value are determined on the basis of historical resource usage data corresponding to at least one historical user, and the historical resource usage data comprises a foreground running duration, application power consumption and Internet access data traffic; and an initial adjustment factor updating unit configured to update the initial adjustment factor according to target resource usage data corresponding to the current user to generate the target adjustment factor.

In an exemplary embodiment, the running state adjusting module 30 comprises: a threshold value determination sub-module configured to acquire various types of resource usage data in the current running information, and determine a threshold value corresponding to each type of resource usage data in the target threshold value; a data comparison sub-module configured to respectively compare each type of resource usage data with the corresponding threshold value to obtain a comparison result corresponding to each type of resource usage data; and a running state adjusting sub-module configured to adjust the running state of the target application in the current restricted time period according to the comparison result corresponding to each type of resource usage data.

In an exemplary embodiment, the running state adjusting sub-module specifically comprises: an overuse tag setting unit configured to set an overuse tag corresponding to the resource whose usage data is greater than the corresponding threshold value to true, and set an overuse tag corresponding to the resource whose usage data is not greater than the corresponding threshold value to false; and a running state adjusting unit configured to adjust the running state of the target application in the current restricted time period according to the overuse tag of each type of resources.

In an exemplary embodiment, the running state adjusting unit specifically comprises: a running state adjusting sub-unit configured to perform a logic operation on a current overuse tag of each type of resources, and adjust the running state of the target application in the current restricted time period to be a restricted running state or halted running state according to a result of the logic operation.

In an exemplary embodiment, the running state adjusting unit specifically comprises: a resource level acquiring sub-unit configured to, in the case where an overuse resource with the overuse tag being true exists in the various types of resources, acquire a resource level of the overuse resource; a halted running state adjusting sub-unit configured to, when the resource level of the overuse resource reaches a preset level, adjust the running state of the target application in the current restricted time period to be a halted running state; and a restricted running state adjusting sub-unit configured to, when the resource level of the overuse resource does not reach the preset level, adjust the running state of the target application in the current restricted time period to be a restricted running state.

In an exemplary embodiment, the current running information acquiring module 10 comprises: an initial resource usage data obtaining unit configured to obtain initial resource usage data of the target application in the current restricted time period; and a current running information obtaining unit configured to determine a resource modification factor on the basis of current running environment data of the target application, and modify the initial resource usage data on the basis of the resource modification factor to obtain the current running information.

The modules in the apparatus for adjusting a running state of an application correspond to the steps in the examples of the method for adjusting a running state of an application, and the functions and implementation processes thereof are not repeated herein.

In addition, the present disclosure further provides a computer readable storage medium.

The computer readable storage medium of the present disclosure stores one or more computer programs which, when executed by a processor, implement the steps of the described method for adjusting a running state of an application.

For the method implemented when one or more computer programs are executed, reference may be made to various examples of the method for adjusting a running state of an application in the present disclosure, and details are not repeatedly described herein.

It should be noted that, in this specification, the terms "comprise" and "contain", or any other variant thereof are intended to cover a non-exclusive inclusion, such that a process, a method, an article, or a system that comprises a series of elements not only comprises those elements, but also comprises other elements that are not explicitly listed, or further comprises elements inherent to the process, the method, the article, or the system. Without more limitations, an element limited by "comprise a..." does not exclude other same elements also existing in a process, a method, an article, or a system that comprises the element.

The described serial numbers of the present disclosure are only for description, and do not represent the advantages and disadvantages of the examples.

The present disclosure may be used in numerous general-purpose or special-purpose computer system environments or configurations. For example, a personal computer, a server computer, a handheld device or a portable device, a tablet device, a multiprocessor system, a microprocessor-based system, a set-top box, a programmable consumer electronic device, a network PC, a minicomputer, a mainframe computer, a distributed computing environment including any of the described systems or devices, and the like. The present disclosure may be described in the general context of computer-executable instructions executed by a computer, such as program modules. Generally, program modules include routines, programs, objects, components, data structures, etc., that perform particular tasks or implement particular abstract data types. The present disclosure may also be practiced in distributed computing environments where tasks are performed by remote processing devices that are connected through a communications network. In a distributed computing environment, program modules may be located in both local and remote computer storage media including storage devices.

From the description of the described embodiments, a person skilled in the art may clearly understand that the methods according to the described examples may be implemented by software and a necessary universal hardware platform, and definitely may also be implemented by hardware. However, in many cases, the former is a preferred implementation. Based on such understanding, the technical solutions of the present disclosure essentially or the part contributing to the prior art may be embodied in the form of a software product. The computer software product is stored in the described storage medium (such as a ROM/RAM, a magnetic disk, or an optical disk), and includes several instructions for causing a terminal device (which may be a mobile phone, a computer, a server, an air conditioner or a network device) to execute the methods described in the examples of the present disclosure.

The present disclosure provides a method for adjusting a running state of an application. The method comprises: current running information of a target application is acquired; wherein the current running information is resource usage data of the target application in a current restricted time period; a target adjustment factor corresponding to a current user and a basic threshold value of the target application in the current restricted time period are acquired, and a target threshold value is calculated on the basis of the target adjustment factor and the basic threshold value; and a running state of the target application in the current restricted time period is adjusted on the basis of a comparison result between the current running information and the target threshold value. By means of the described method, the target application can be dynamically adjusted, allowing for flexible running restriction on the target application, improving the user experience, and solving the technical problem of low flexibility of existing target application restriction methods.

The foregoing content is merely exemplary examples of the present disclosure, but are not intended to limit the patent scope of the present disclosure. Any equivalent structure or equivalent process variation made according to the description and the drawings of the present disclosure, or direct or indirect application in other related technical fields, shall fall within the patent scope of protection of the present disclosure.

## Claims

1. A method for adjusting a running state of an application, comprising:
acquiring current running information of a target application; wherein the current running information is resource usage data of the target application in a current restricted time period;
acquiring a target adjustment factor corresponding to a current user and a basic threshold value of the target application in the current restricted time period, and calculating a target threshold value on the basis of the target adjustment factor and the basic threshold value; and
adjusting a running state of the target application in the current restricted time period on the basis of a comparison result between the current running information and the target threshold value.

2. The method for adjusting a running state of an application according to claim 1, wherein before acquiring a target adjustment factor corresponding to a current user and a basic threshold value of the target application in the current restricted time period, the method further comprises:
upon reception of an adjustment operation instruction for a preset initial adjustment factor or the basic threshold value, calculating a bias value between a feedback value in the adjustment operation instruction and the basic threshold value; and
increasing or decreasing the initial adjustment factor or the basic threshold value according to the bias value to generate the target adjustment factor.

3. The method for adjusting a running state of an application according to claim 1, wherein before acquiring a target adjustment factor corresponding to a current user and a basic threshold value of the target application in the current restricted time period, the method further comprises:
reading an initial adjustment factor and an initial threshold value; wherein the initial adjustment factor and the initial threshold value are determined on the basis of historical resource usage data corresponding to at least one historical user, and the historical resource usage data comprises a foreground running duration, application power consumption and Internet access data traffic; and
updating the initial adjustment factor according to target resource usage data corresponding to the current user to generate the target adjustment factor.

4. The method for adjusting a running state of an application according to claim 1, wherein adjusting a running state of the target application in the current restricted time period on the basis of a comparison result between the current running information and the target threshold value comprises:
acquiring various types of resource usage data in the current running information, and determining a threshold value corresponding to each type of resource usage data in the target threshold value;
respectively comparing each type of resource usage data with the corresponding threshold value to obtain a comparison result corresponding to each type of resource usage data; and
adjusting the running state of the target application in the current restricted time period according to the comparison result corresponding to each type of resource usage data.

5. The method for adjusting a running state of an application according to claim 4, wherein adjusting the running state of the target application in the current restricted time period according to the comparison result corresponding to each type of resource usage data comprises:
setting an overuse tag corresponding to the resource whose usage data is greater than the corresponding threshold value to true, and setting an overuse tag corresponding to the resource whose usage data is not greater than the corresponding threshold value to false; and
adjusting the running state of the target application in the current restricted time period according to the overuse tag of each type of resources.

6. The method for adjusting a running state of an application according to claim 5, wherein adjusting the running state of the target application in the current restricted time period according to the overuse tag of each type of resources comprises:
performing a logic operation on a current overuse tag of each type of resources, and adjusting the running state of the target application in the current restricted time period to be a restricted running state or halted running state according to a result of the logic operation.

7. The method for adjusting a running state of an application according to claim 5, wherein adjusting the running state of the target application in the current restricted time period according to the overuse tag of each type of resources comprises:
in a case where an overuse resource with the overuse tag being true exists in the various types of resources, acquiring a resource level of the overuse resource;
when the resource level of the overuse resource reaches a preset level, adjusting the running state of the target application in the current restricted time period to be a halted running state; and
when the resource level of the overuse resource does not reach the preset level, adjusting the running state of the target application in the current restricted time period to be a restricted running state.

8. The method for adjusting a running state of an application according to any one of claims 1-7, wherein acquiring current running information of a target application comprises:
obtaining initial resource usage data of the target application in the current restricted time period; and
determining a resource modification factor on the basis of current running environment data of the target application, and modifying the initial resource usage data on the basis of the resource modification factor to obtain the current running information.

9. A terminal, comprising a processor, a memory, and one or more computer programs stored in the memory and executable by the processor, wherein the one or more computer programs are executable by one or more processors to implement the steps of the method for adjusting a running state of an application according to any one of claims 1 to 8.

10. A computer readable storage medium, wherein the computer readable storage medium stores one or more computer programs which, when executed by a processor, implement the steps of the method for adjusting a running state of an application according to any one of claims 1 to 8.
